# EUROPÄISCHE PATENTSCHRIFT

(11) **EP 4 169 144 B1**
(45) Veröffentlichungstag und Bekanntmachung des Hinweises auf die Patenterteilung: **09.04.2025**
(21) Anmeldenummer: 21754763.7
(22) Anmeldetag: 28.07.2021
(51) Int. Cl.: H02J 9/06, H02J 3/36

(54) **VERFAHREN UND SYSTEM ZUR AUTOMATISIERTEN AUSWAHL UND/ODER KONFIGURATION EINER ELEKTRONISCHEN STROMVERSORGUNG ZUR VERSORGUNG ELEKTRISCHER VERBRAUCHER MIT ENERGIE AUS EINEM VERSORGUNGSNETZ**
METHOD AND SYSTEM FOR AUTOMATED SELECTION AND / OR CONFIGURATION OF AN ELECTRONIC POWER SUPPLY FOR SUPPLYING ENERGY FROM A SUPPLY NETWORK TO ELECTRICITY CONSUMERS
PROCÉDÉ ET SYSTÈME DE SÉLECTION ET/OU DE CONFIGURATION AUTOMATISÉES D'UNE ALIMENTATION ÉLECTRIQUE ÉLECTRONIQUE DESTINÉS À L'ALIMENTATION DES CONSOMMATEURS ÉLECTRIQUES EN ÉNERGIE À PARTIR D'UN RÉSEAU D'ALIMENTATION ÉLECTRIQUE

(30) Priorität: 26.08.2020 EP 20192820
(43) Veröffentlichungstag der Anmeldung: 26.04.2023
(73) Patentinhaber: Siemens Aktiengesellschaft, 80333 München (DE)
(72) Erfinder: KOEHLER, Maximilian, 80935 München (DE); SEEWALD, Christopher, 91207 Lauf a. d. Pegnitz (DE)
(74) Vertreter: Siemens Patent Attorneys
(86) Internationale Anmeldenummer: PCT/EP2021/071114
(87) Internationale Veröffentlichungsnummer: WO 2022/042983

(56) Entgegenhaltungen:
- WO-A1-2016/029942
- DE-T5- 112010 004 913

## Beschreibung

Die Erfindung betrifft ein Verfahren und ein System zur automatisierten Auswahl und/oder Konfiguration einer elektronischen Stromversorgung zur Versorgung elektrischer Verbraucher mit Energie aus einem Versorgungsnetz gemäß Patentanspruch 1 bzw.5.

In der industriellen Automatisierungstechnik (z.B. bei der diskreten Fertigungstechnik oder der Prozesstechnik) oder in der Gebäudeautomatisierung werden in großem Umfang elektronische Stromversorgungen für eine Versorgung von Verbrauchern, wie z.B. elektronische Steuerungen, Pumpen, Ventile, Sensoren, etc., mit elektrischer Energie aus einem Versorgungsnetz eingesetzt. Die Verbraucher werden von der Stromversorgung mit einer geeigneten, oft vordefinierten Spannung versorgt. Typischerweise wird dazu ein eingangsseitig hohes Spannungsniveau eines einphasigen oder dreiphasigen Versorgungsnetzes, wie z.B. eine 230V-Wechselspannung oder eine 120V-Wechselspannung, auf ein für die Verbraucher vordefiniertes, niedrigeres und üblicherweise konstantes Spannungsniveau (z.B. 24 V Gleichspannung als Nennausgangsspannung und 28 V Gleichspannung als maximale Ausgangsspannung) auf einer Ausgangsseite der Stromversorgung umgesetzt.

Moderne elektronische Stromversorgungen in der industriellen Automatisierungstechnik oder in der Gebäudeautomatisierung sind dabei üblicherweise als getaktete Stromversorgungen bzw. Schaltnetzteile (manchmal auch als Schaltnetzgeräte bezeichnet) ausgebildet. Derartige getaktete Stromversorgungen bzw. Schaltnetzteile sind beispielsweise aus der EP 3544166 A1 und der EP 3451476 A1 bekannt.

Eine solche getaktete Stromversorgung bzw. ein solches Schaltnetzteil umfasst in der Regel eine Eingangsstufe, beispielsweise in Form einer Gleichrichtereinheit, einen Zwischenkreis und einen Schaltwandler, durch welche die Wechselspannung aus dem Versorgungsnetz in eine Gleichspannung für die Energieversorgung der Verbraucher umgewandelt wird. Von der Stromversorgung wird die meist unstabilisierte Eingangsspannung dann in eine konstante Ausgangsspannung bzw. in die vordefinierte Versorgungsspannung für die elektrischen Verbraucher umgesetzt, wobei eine Konstanz der Ausgangsspannung und/oder eines Ausgangsstroms durch eine Regelung des Energieflusses erreicht wird.

Eine absolut zuverlässige Stromversorgung ist dabei eine notwendige Voraussetzung für den reibungslosen Betrieb der Verbraucher. Um auch bei einem Ausfall des Versorgungsnetzes die Verbraucher zumindest für eine definierte Zeit weiter versorgen zu können, kann eine eingangs erläuterte Stromversorgung als eine sogenannte "unterbrechungsfreie Stromversorgung (USV)" ausgebildet sein bzw. zusätzlich eine derartige "unterbrechungsfreie Stromversorgung (USV)" umfassen (siehe z.B. EP 3379692 A1). Die Stromversorgung umfasst dann üblicherweise neben einer eingangsseitig an das Versorgungsnetz angeschlossenen Stromversorgungseinheit zusätzlich noch eine USV-Einheit und eine (oder mehrere) Energiespeichereinheit(en) (z.B. einen Kondensator oder eine Batterie). Bei einem Einbruch oder einem Ausfall des Versorgungsnetzes werden dann die Verbraucher möglichst unterbrechungsfrei für eine bestimmte Zeit (die sogenannte "Pufferzeit") mit Energie aus der Energiespeichereinheit versorgt. Die USV-Einheit sorgt dabei für ein unterbrechungsfreies Umschalten von der Stromversorgungseinheit zu der Energiespeichereinheit und für ein Laden der Energiespeichereinheit durch die Stromversorgungseinheit.

Stromversorgungen in der industriellen Automatisierungstechnik und in der Gebäudetechnik sind oftmals ausgebildet, auf einer Hutschiene befestigt zu werden. Somit können sie besonders einfach in Schaltschränken installiert werden.

Bei der Planung oder Modernisierung einer technischen Einrichtung mit einer derartigen Stromversorgung, oder bei einem Ersatz einer defekten Stromversorgung, besteht die Aufgabe, eine für den jeweiligen Einsatzzweck geeignet ausgelegte und dimensionierte Stromversorgung auszuwählen. Hierzu sind schon verschiedene Werkzeuge zum Beispiel in Form von Planungstools und Produktkonfiguratoren bekannt, die die Hersteller von Stromversorgungen ihren Kunden anbieten. Als Beispiel seien hier der sogenannte "SITOP Konfigurator" oder das "TIA Selection Tool" der Anmelderin genannt.

Bei diesen Werkzeugen werden anhand einfacher statischer Auswahlkriterien die Umgebungs- und die Betriebsbedingungen der technischen Einrichtung angenähert und automatisiert passende Produktvorschläge generiert. Die Auswahlkriterien können sich bei großen Anlagenprojektierungstools automatisch aus den Rahmenbedingungen des Projektes ergeben, oder sie können beispielsweise bei internetbasierenden Produktkonfiguratoren von einem Benutzer abgefragt, manuell von dem Benutzer in den Konfigurator eingegeben, von dem Konfigurator erfasst und verarbeitet werden. Da bei derartigen Stromversorgungen eine zuverlässige Versorgung ausgangseitiger Verbraucher im Vordergrund steht, beziehen sich die Auswahlkriterien im Wesentlichen auf die Verbraucherseite und hierbei beispielsweise auf Laststrom, Pufferzeit oder Umgebungstemperatur. Eingangsseitig bzw. netzseitig ist lediglich eine Auswahl zwischen einem ein- oder dreiphasigen Versorgungsnetz zu treffen.

Eine gute Qualität der diesen Werkzeugen zugrundeliegenden Auswahl- und Konfigurationsverfahren ist essenziell, um Unterdimensionierungen zu vermeiden, die nach der Inbetriebnahme zu Störungen beim Betrieb der technischen Einrichtung führen können, aber auch um Überdimensionierungen mit entsprechenden Mehrkosten zu vermeiden.

Mit Hilfe dieser Werkzeuge sind in der Regel bereits gute Ergebnisse bei der Auswahl und/oder Konfiguration von Stromversorgungen erzielbar. Dokument WO 2016/029942 A1 offenbart ein Verfahren zur automatisierten Konfiguration einer Stromversorgung zur Versorgung von elektrischen Verbrauchern mit Energie aus einem Versorgungsnetz, wobei die Konfiguration der Stromversorgung unter Nutzung von Messdaten und daraus abgeleiteter Daten des Versorgungsnetzes erfolgt.

Ausgehend hiervon ist es Aufgabe vorliegender Erfindung, noch bessere Ergebnisse bei der Auswahl und/oder Konfiguration von Stromversorgungen zu erzielen, um mit noch höherer Wahrscheinlichkeit gezielt eine Auswahl einer optimalen Stromversorgung für einen fehlerfreien Betrieb der Stromversorgung an dem Versorgungsnetz zu gewährleisten.

Die Lösung dieser Aufgabe gelingt durch ein Verfahren gemäß Patentanspruch 1 und ein System gemäß Patentanspruch 5. Ein Computer-Programm ist Gegenstand des Anspruchs 7. Vorteilhafte Ausgestaltungen sind jeweils Gegenstand der Unteransprüche.

Wie sich herausgestellt hat, beruhen die Gründe für eine nicht optimale Auswahl und/oder Konfiguration der Stromversorgung und somit Fehler beim Betrieb der technischen Einrichtung oftmals in fehlender Kenntnis und fehlender Berücksichtigung der Qualität, insbesondere der Dynamik, des Versorgungsnetzes. Die Qualität, insbesondere die Dynamik, des Versorgungsnetzes, können besonders einfach auf Basis von Messdaten und/oder daraus abgeleiteter Daten des Versorgungsnetzes Netzes ermittelt werden. Erfindungsgemäß erfolgt deshalb die automatisierte Auswahl und/oder Konfiguration einer elektronischen Stromversorgung unter Nutzung von Messdaten und/oder daraus abgeleiteter Daten des Versorgungsnetzes.

Mit Hilfe moderner internetbasierender Datenerfassungs- und Übertragungsmöglichkeiten und computergestützter Analysemethoden ist eine schnelle und aufwandsarme automatisierte Übertragung und Auswertung der Messdaten, beispielsweise in einem cloud-gestützten Auswahl- und/oder Konfigurationstool, möglich.

Erfindungsgemäß wird ein Verfahren zur automatisierten Konfiguration einer elektronischen Stromversorgung zur Versorgung von elektrischen Verbrauchern mit Energie aus einem Versorgungsnetz bereitgestellt, wobei die Konfiguration der Stromversorgung unter Nutzung von Messdaten und/oder daraus abgeleiteter Daten des Versorgungsnetzes erfolgt, wobei zur Konfiguration der Stromversorgung die Messdaten und/oder die daraus abgeleiteten Daten des Versorgungsnetzes analysiert und daraus Fehler des Versorgungsnetzes ermittelt werden, wobei die Daten auf Fehler in Form von Ereignissen analysiert werden, dadurch gekennzeichnet, dass die Ereignisse ein Netz-und/oder Phasenausfall sind, wobei die Stromversorgung als ein Schaltnetzteil ausgebildet ist, wobei das Schaltnetzteil eine elektronische Baugruppe ist, die eine unstabilisierte Eingangsspannung in eine konstante Ausgangsspannung umwandelt, und wobei die Stromversorgung konfiguriert wird, dass sie die ermittelten Fehler derart kompensiert, dass die Energieversorgung der elektrischen Verbraucher störungsfrei erfolgt, wobei das Verfahren die folgenden Schritte umfasst:
- Empfangen der Messdaten und/oder daraus abgeleiteter Daten des Versorgungsnetzes,
- Analysieren der empfangenen Daten, um die Fehler des Versorgungsnetzes zu ermitteln,
- Bilden mehrerer Kennwerte für die ermittelten Fehler des Versorgungsnetzes,
- Konfigurieren der Stromversorgung in Abhängigkeit von den ermittelten Fehlern, wobei auf eine Datenbank mit verschiedenen Typen und Konfigurationen von Stromversorgungen zurückgegriffen wird, denen jeweils Kennwerte zu Fehlern des Versorgungsnetzes zugeordnet sind,
- Ausgeben von Informationen zu der konfigurierten Stromversorgung.

Die Messdaten können sich beispielsweise auf Werte von Spannung, Strom, Frequenz, Anzahl der Phasen, Phasenwinkel oder Leistung beziehen. Prinzipiell sind aber auch mechanische Werte, wie z.B. Temperatur, Schwingungen, etc. denkbar. Daraus abgeleitete Daten können sich beispielsweise auf Effektivwerte beziehen.

Die ausgegebenen Informationen können beispielsweise eine Bestellnummer der Stromversorgung umfassen.

Für eine genaue zeitliche Datenanalyse umfassen die Messdaten bzw. die daraus abgeleiteten Daten jeweils einen Wert und einen zugeordneten Zeitstempel, der eine Information über den Zeitpunkt der Erfassung des Wertes gibt. Der Zeitstempel kann dabei eine Zeit und/oder ein Datum umfassen. Die Zeit bzw. das Datum können dabei absolut sein, oder aber auch relativ sein (z.B. ein Zähler, der ausgehend von einem ersten Messwert nach oben zählt).

Eine besonders gute Qualität der Auswahl und/oder Konfiguration der Stromversorgung ist möglich, wenn die Daten auf Fehler in Form von Ereignissen, insbesondere auf Netz- und/oder Phasenausfall, analysiert werden. Typischerweise werden Ereignisse durch einen definierten Anfang (z.B. eine Grenzwertüberschreitung) und ein definiertes Ende (z.B. eine anschließende Grenzwertunterschreitung) bestimmt, d.h. ein Ereignis ist nicht dauerhaft messbar. Beispielsweise liegt ein Netzausfall vor, sobald der Effektivwert der Spannung in einer oder mehr Phasen unter 10 % der Nennspannung sinkt. Nachdem ein Ereignis vorübergegangen ist, kann ein charakteristischer Kennwert gebildet werden, wie beispielsweise die Dauer des Ereignisses (z.B. Dauer eines Netzausfalles).

Weiterhin ist eine besonders gute Qualität bei der Auswahl und/oder Konfiguration möglich, wenn die Daten auf Fehler in Form von Abweichungen von Sollwerten, insbesondere auf Spannungseinbruch, Spannungsschwellung, Spannungsschwankungen, und/oder Phasenasymmetrien, analysiert werden. Eine Abweichung ist hierbei als eine quasi-statische Störung definiert, die ständig messbar ist. Beispielsweise können bei der Netzfrequenz dauerhaft Messwerte aufgenommen werden und zu jedem Zeitpunkt eine Abweichung ermittelt werden.

Ein Spannungseinbruch liegt beispielsweise vor, wenn der Effektivwert der Spannung unter einen Grenzwert von 90 % der Nennspannung fällt. Bei einer Spannungsschwellung steigt der Effektivwert der Spannung beispielsweise über eine Schwelle von 110 % der Nennspannung.

Ein besonders vorteilhafter Anwendungsfall liegt vor, wenn die Verbraucher Niederspannungsverbraucher sind.

Besonders vorteilhaft stellt die Stromversorgung ausgangsseitig eine Gleichspannung mit einer Nennspannung von 5 - 60 V dc, insbesondere von 24 V dc, bereit. Dieses Spannungsniveau ist vor allem für die industrielle Automatisierungstechnik und die Gebäudetechnik geeignet.

Erfindungsgemäß ist die Stromversorgung als ein Schaltnetzteil ausgebildet, d.h. als eine elektronische Baugruppe, die eine unstabilisierte Eingangsspannung in eine konstante Ausgangsspannung umwandelt. Ein derartiges Schaltnetzteil zeichnet sich durch geringes Gewicht und einen hohen Wirkungsgrad aus.

Gemäß einer weiteren vorteilhaften Ausgestaltung ist die Stromversorgung für eine Hutschienenmontage ausgebildet. Somit kann sie besonders einfach in einem Schaltschrank installiert werden.

Gemäß einer besonders vorteilhaften Ausgestaltung ist die Stromversorgung als eine unterbrechungsfreie Stromversorgung ausgebildet bzw. umfasst zusätzlich eine unterbrechungsfreie Stromversorgung.

Erfindungsgemäß wird ein System zur automatisierten Konfiguration einer elektronischen Stromversorgung zur Versorgung von elektrischen Verbrauchern mit Energie aus einem Versorgungsnetz bereitgestellt, wobei das System derart ausgebildet ist, dass die Konfiguration der Stromversorgung unter Nutzung von Messdaten und/oder daraus abgeleiteter Daten des Versorgungsnetzes erfolgt, dadurch gekennzeichnet , dass das System umfasst:
- eine Empfangseinheit zum Empfangen von Messdaten und/oder daraus abgeleiteter Daten des Versorgungsnetzes,
- eine Analyseeinheit, die ausgebildet ist, die empfangenen Daten zu analysieren, um Fehler des Versorgungsnetzes zu ermitteln, wobei die Fehler in Form von Ereignissen analysiert werden, wobei die Ereignisse ein Netz- und/oder Phasenausfall sind, wobei die Analyseeinheit ausgebildet ist, mehrere Kennwerte für die ermittelten Fehler des Versorgungsnetzes zu bilden,
- eine Konfigurationseinheit, die ausgebildet ist, eine Stromversorgung in Abhängigkeit von den ermittelten Fehlern zu konfigurieren, wobei die Konfigurationseinheit auf eine Datenbank zugreift, in der verschiedene Typen und Konfigurationen von Stromversorgungen gespeichert sind, denen jeweils Kennwerte zu Fehlern des Versorgungsnetzes zugeordnet sind,
- eine Ausgabeeinheit zur Ausgabe von Informationen zu der konfigurierten Stromversorgung, wobei die Stromversorgung als ein Schaltnetzteil ausgebildet ist, wobei das Schaltnetzteil eine elektronische Baugruppe ist, die eine unstabilisierte Eingangsspannung in eine konstante Ausgangsspannung umwandelt, und wobei das System ausgebildet ist, die Stromversorgung zu konfigurieren, dass diese die ermittelten Fehler derart kompensiert, dass die Energieversorgung der elektrischen Verbraucher störungsfrei erfolgt.

Von Vorteil ist die Stromversorgung dabei als eine unterbrechungsfreie Stromversorgung ausgebildet bzw. umfasst zusätzlich eine unterbrechungsfreie Stromversorgung.

Bevorzugt sind die Verbraucher Niederspannungsverbraucher.

Besonders vorteilhaft stellt die Stromversorgung ausgangsseitig eine Gleichspannung mit einer Nennspannung von 5 - 60 V dc, insbesondere von 24 V dc, bereit.

Gemäß einer weiteren vorteilhaften Ausgestaltung ist die Stromversorgung für eine Hutschienenmontage ausgebildet.

Die für das erfindungsgemäße Verfahren und seine vorteilhaften Ausgestaltungen genannten Wirkungen und Vorteile gelten entsprechend für das erfindungsgemäße System und seine vorteilhaften Ausgestaltungen.

Ein erfindungsgemäßes Computer-Programm umfasst Anweisungen die, wenn das Programm auf einem Computer ausgeführt wird, den Computer veranlassen, das vorstehend beschriebene Verfahren auszuführen.

Ein entsprechendes Computer-Programm-Produkt umfasst ein Speichermedium, auf dem ein Programm mit Anweisungen gespeichert ist, die, wenn das Programm auf einem Computer ausgeführt wird, den Computer veranlassen, ein vorstehend beschriebenes Verfahren auszuführen.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert; darin zeigen:
- FIG 1: eine Prinzipdarstellung einer elektronischen Stromversorgung für die industrielle Automatisierung,
- FIG 2: eine Prinzipdarstellung einer unterbrechungsfreien elektronischen Stromversorgung für die industrielle Automatisierung,
- FIG 3: eine Prinzipdarstellung einer als Schaltnetzteil ausgebildeten elektronischen Stromversorgung,
- FIG 4: ein Beispiel für einen erfindungsgemäßen Verfahrensablauf,
- FIG 5: ein Beispiel für eine Fehleranalyse von Messdaten eines Versorgungsnetzes,
- FIG 6: ein System zur automatisierten Auswahl und/oder Konfiguration einer elektronischen Stromversorgung gemäß FIG 1 bis 3 und insbesondere zur Durchführung des Verfahrens nach FIG 4.

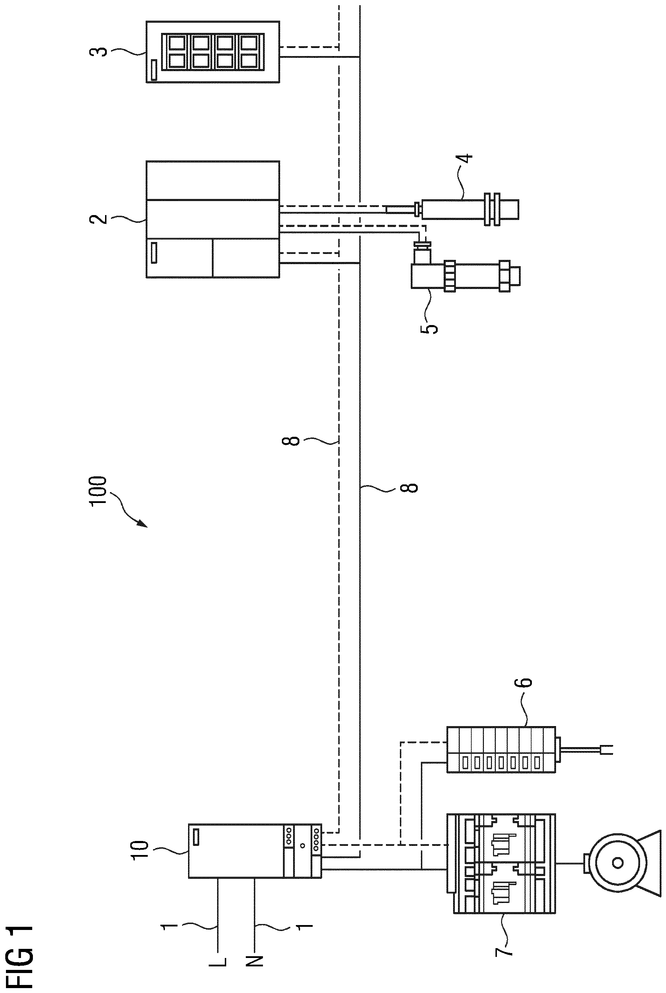

FIG 1 zeigt beispielhaft in einer prinzipiellen Darstellung ein Automatisierungssystems 100 für eine Anlage der diskreten Fertigungstechnik oder der Prozesstechnik. Das Automatisierungssystem 100 umfasst eine industrielle Stromversorgung 10 zur Versorgung von elektrischen Verbrauchern 2, 3, 4, 5, 6, 7 des Automatisierungssystems 100 mit Energie aus einem Versorgungsnetz 1. Bei den Verbrauchern handelt es sich beispielsweise um eine speicherprogrammierbare Steuerung 2, einen Schalter 3, Sensoren, wie z.B. Temperatursensoren 4 und Näherungssensoren 5, und um Aktoren, wie z.B. eine Ventilansteuerung 6 oder ein Motorsteuergerät 7.

Die Verbraucher 2, 3, 4, 5, 6, 7 werden von der Stromversorgung 10 mit einer geeigneten, vordefinierten Spannung versorgt. Typischerweise wird dazu ein eingangsseitig hohes Spannungsniveau des einphasigen oder dreiphasigen Versorgungsnetzes 1, wie z.B. eine 230V-Wechselspannung oder eine 120V-Wechselspannung, ausgangsseitig auf ein für die Verbraucher vordefiniertes, niedrigeres und üblicherweise konstantes Spannungsniveau (z.B. 5 - 60 V Gleichspannung als Nennausgangsspannung, insbesondere 24 V Gleichspannung als Nennausgangsspannung und z.B. 28 V Gleichspannung als maximale Ausgangsspannung) umgesetzt. Die Verbraucher 2, 3, 4, 5, 6, 7, welche in beliebiger Anzahl vorhanden sein können, sind in dem in Fig. 1 dargestellten Ausführungsbeispiel über ein Versorgungsnetzwerk 8 zur Versorgung mit elektrischer Energie mit der Stromversorgung 10 verbunden. Optional können die Verbraucher 2, 3, 4, 5, 6, 7 zusätzlich auch über ein nicht näher dargestelltes Kommunikationsnetzwerk, wie zum Beispiel einem Industrial Ethernet, mit der Stromversorgung 10 verbunden sein.

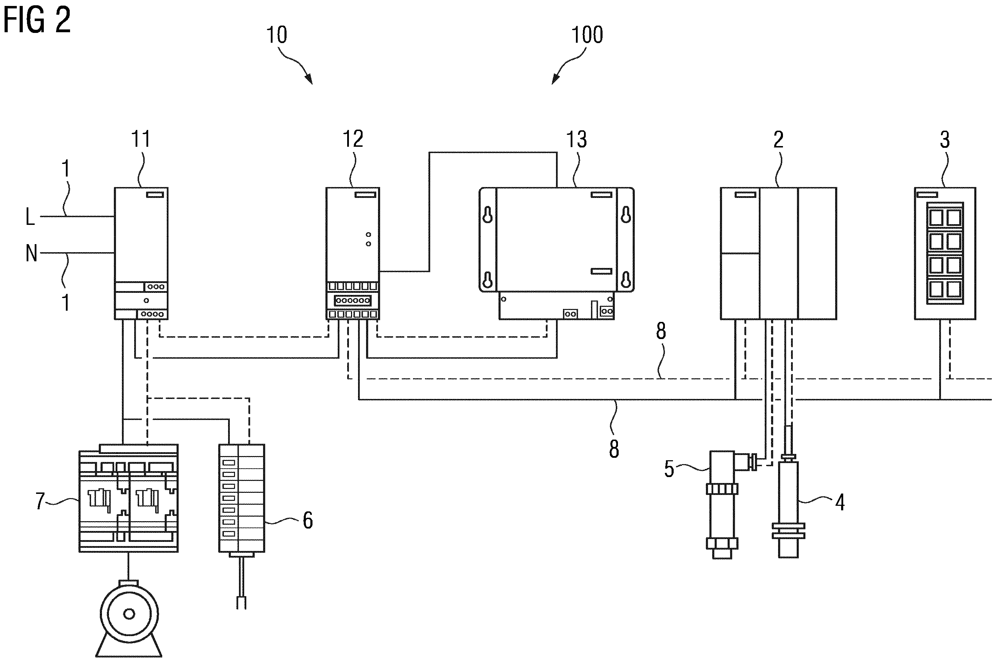

Die Stromversorgung 10 kann dabei - wie in FIG 2 dargestellt - auch als unterbrechungsfreie Stromversorgung (USV) ausgebildet sein bzw. zusätzlich eine unterbrechungsfreie Stromversorgung (USV) umfassen. Die Stromversorgung 10 umfasst dann beispielsweise eine Stromversorgungseinheit 11, eine USV-Einheit (Umschalt- und Ladeeinheit) 12 und eine Energiespeichereinheit 13. Die Stromversorgungseinheit 11 hat dabei im Wesentlichen die gleiche Funktion wie die Stromversorgung 10 in FIG 1. Die USV-Einheit 12 ist elektrisch in Reihe zwischen die Stromversorgungseinheit 11 und die Verbraucher 2, 3, 4, 5 geschaltet. Sie nimmt Strom der Stromversorgungseinheit 11 auf und schaltet ihn an die angeschlossenen Verbraucher 2, 3, 4, 5 durch. An die USV-Einheit 12 ist wiederum die Energiespeichereinheit 13 angeschlossen.

Die USV-Einheit 12 verfügt über eine Elektronik, die dafür sorgt, dass unterbrechungsfrei zwischen einer Energieversorgung der Verbraucher durch die Stromversorgungseinheit 11 und einer Energieversorgung der Verbraucher 2, 3, 4, 5 durch die Batterieeinheit 13 (Pufferbetrieb) umgeschaltet werden kann.

Die Energiespeichereinheit 13 umfasst eine beliebige Anzahl von Batteriemodulen. Die Batteriemodule können beispielsweise auf wartungsfreien Blei-Akkus, temperatur-unempfindlichen Reinblei-Akkus, langlebigen Lithium-Akkus oder auf einer Kondensatortechnologie basieren. Bei Vorhandensein einer Energiespeichereinheit 13 kann für die Verbraucher 2, 3, 4, 5 ein Fehler, insbesondere ein Ausfall des Versorgungsnetzes 1, für eine definierte Zeitdauer ("Pufferzeit") durch eine Pufferspannung überbrückt werden, welche von der Energiespeichereinheit 13 geliefert wird.

Moderne Stromversorgungen 10 in industriellen Anwendungen sind dabei üblicherweise als getaktete Stromversorgungen bzw. als Schaltnetzteile (Schaltnetzgeräte) ausgebildet.

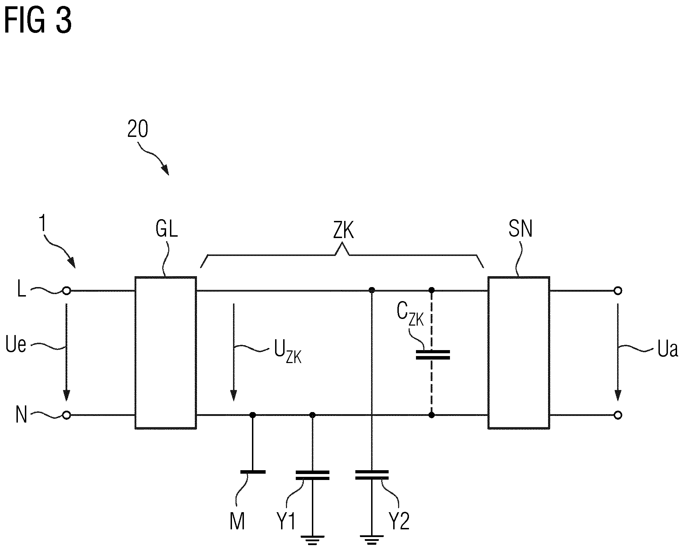

Wie in Figur 3 schematisch und beispielhaft dargestellt, ist die einphasige Stromversorgung 10 gemäß FIG 1 bzw. die Stromversorgungseinheit 11 gemäß FIG 2 vorzugsweise als eine getaktete Stromversorgung bzw. als ein einphasiges Schaltnetzteil 20 ausgebildet. Die Stromversorgung 20 wird von dem Versorgungsnetz 1 mit der Eingangsspannung Ue versorgt, welche z.B. von einer Spannungsdifferenz zwischen einem Außenleiter L und dem Neutralleiter N des Versorgungsnetzes 1 gebildet wird. D.h. es wird zur Spannungsversorgung der Stromversorgung 20 nur ein Außenleiter L bzw. eine Phase L des Versorgungsnetzes 1 genutzt.

Die Eingangsspannung Ue, welche beispielsweise eine 230V-Wechselspannung sein kann, wird über eine Gleichrichtereinheit GL als Eingangsstufe der Stromversorgung 20 in eine gleichgerichtete Zwischenkreisspannung UZK an einer Ausgangsseite der Gleichrichtereinheit GL bzw. an einer Eingangsseite eines Zwischenkreises ZK umgesetzt. Die Zwischenkreisspannung UZK ist dabei auf ein Bezugspotential M bzw. ein Massepotential M bezogen. Der Zwischenkreis ZK kann beispielsweise einen optionalen Zwischenkreiskondensator CZK umfassen. Weiterhin sind im Zwischenkreis ZK z.B. aus Gründen der elektromagnetischen Verträglichkeit zumindest zwei Y-Kondensatoren Y1, Y2 angeschlossen.

Von der Stromversorgung 20 wird die meist unstabilisierte Eingangsspannung Ue in eine konstante Ausgangsspannung Ua (z.B. eine Gleichspannung von 4 bis 28V) an einer Ausgangsseite der Stromversorgung 1 zur Versorgung eines oder mehrerer Verbraucher umgewandelt, wobei eine Konstanz der Ausgangsspannung Ua durch eine Regelung des Energieflusses erreicht wird. Dazu umfasst die Stromversorgung 1 weiterhin einen Schaltwandler SN, welcher an einer Ausgangsseite des Zwischenkreises ZK angeordnet ist. Dieser Schaltwandler SN weist zumindest ein periodisch arbeitendes, elektronisches Schaltelement auf und kann z.B. als potentialtrennender Schaltwandler SN, welche eine galvanische Trennung (z.B. Transformator) aufweist, oder als ein potentialgebundener (d.h. nicht potentialtrennender) Schaltwandler SN ohne galvanische Trennung ausgeführt sein. An einer Ausgangsseite des Schaltwandlers SN kann dann die konstante Ausgangsspannung Ua abgegriffen werden bzw. einem oder mehreren Verbrauchern zur Verfügung gestellt werden.

Die Stromversorgung 10 gemäß FIG 1 bzw. die Einheiten 11, 12, 13 gemäß FIG 2 sind ausgebildet, auf einer Hutschiene befestigt zu werden. Somit können sie besonders einfach in Schaltschränken installiert werden.

Bei der Planung oder Modernisierung des Automatisierungssystems 100, oder bei einem Ersatz der Stromversorgung 10 im Falle eines Defektes, besteht die Aufgabe, gezielt eine für den jeweiligen Einsatzzweck geeignet ausgelegte und dimensionierte Stromversorgung 10 auszuwählen. Unterdimensionierungen der Stromversorgung 10 können nach der Inbetriebnahme zu Störungen beim Betrieb des Automatisierungssystems 100 führen. Überdimensionierungen sind mit entsprechenden Mehrkosten verbunden. Die Auswahl und/oder Konfiguration der Stromversorgung 10 soll dabei möglichst aufwandsarm und schnell erfolgen.

Aus diesem Grund ist ein qualitativ hochwertiges Verfahren oder System zur automatisierten Auswahl und/oder Konfiguration der Stromversorgung 10 essenziell.

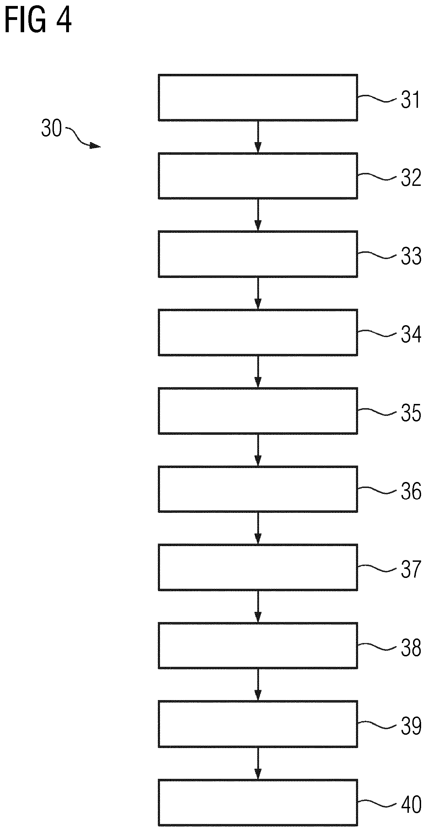

Bei einem in FIG 4 dargestellten Ausführungsbeispiel eines erfindungsgemäßen Verfahrensablaufes 30 zur Auswahl und/oder Konfiguration einer elektronischen Stromversorgung werden hierzu von einem Kunden oder Projekteuer einer Stromversorgung in einem ersten Schritt 31 ausgangsseitige bzw. lastseitige Kenngrößen, wie z.B. der Lastnennstrom und die Umgebungstemperatur, abgefragt und in einem zweiten Schritt 32 von dem Kunden oder Projekteuer empfangen.

In einem dritten Schritt 33 werden Messdaten oder daraus abgeleitete Daten des eingangsseitigen Versorgungsnetzes abgefragt und in einem vierten Schritt 34 von dem Kunden oder Projekteur empfangen. Der Empfang kann beispielswiese durch einen Upload bzw. einen Datenimport über ein Kommunikationsnetzwerk, wie z.B. das Internet, erfolgen.

Die Messdaten können sich beispielsweise auf Werte von Spannung, Strom, Frequenz, Anzahl der Phasen, Phasenwinkel oder Leistung beziehen. Prinzipiell sind aber auch mechanische Werte, wie z.B. Temperatur, Schwingungen, etc. denkbar. Daraus abgeleitete Daten können sich beispielsweise auf Effektivwerte beziehen.

Die Messdaten bzw. die daraus abgeleiteten Daten umfassen dabei jeweils einen Messwert bzw. einen daraus abgeleiteten Wert und einen zugehörigen Zeitstempel, der eine Information über den Zeitpunkt der Erfassung des Wertes gibt. Der Zeitstempel kann dabei eine Zeit und/oder ein Datum umfassen. Die Zeit bzw. das Datum können dabei absolut sein, oder aber auch relativ sein (z.B. ein Zähler, der ausgehend von einem ersten Messwert nach oben zählt).

Der vierte Schritt 34 kann auch eine Formatierung der empfangenen Werte auf einen einheitlichen Standard umfassen.

In einem fünften Schritt 35 werden die empfangenen Daten analysiert, um ein Betriebsverhalten, insbesondere Fehler, des Versorgungsnetzes zu erkennen.

Hierbei werden die Daten auf Fehlerereignisse, insbesondere auf Netz- und/oder Phasenausfall, analysiert.

Die Fehler werden hierbei vorzugsweise anhand von Art, Anzahl und Dauer charakterisiert.

Weiterhin werden in dem Schritt 35 die Daten vorzugsweise auch auf Abweichungen von einem Sollwert (z.B. einem Nennwert), insbesondere auf Spannungseinbruch, Spannungsschwellung, Spannungsschwankungen und/oder Phasenasymmetrien, analysiert.

Von Vorteil werden Netz- und/oder Phasenausfall, Spannungseinbruch und Spannungsschwellung zuerst einzeln für jede Phase und danach phasenunabhängig aus den Messwerten berechnet. Hierfür sind Grenzwerte als Kriterium für das Auftreten eines Fehlerfalles definiert.

Spannungsschwankungen und Phasenasymmetrien sind dagegen jederzeit berechenbar. Für sie kann zu jedem Zeitwert ein fehlerspezifischer Wert ermittelt werden, da sie zeitunabhängig sind.

In einem sechsten Schritt 36 erfolgt eine Bildung eines Kennwertes oder mehrerer Kennwerte für das Betriebsverhalten, insbesondere die Fehler, des Versorgungsnetzes. Hierbei werden die wichtigsten Ergebnisse der Analyse in den Kennwert oder die Kennwerte geschrieben. Zum Beispiel werden zu jedem Fehlerfall die wichtigsten Ergebnisse der Analyse in einen für jeden Fehlerfall spezifischen Kennwert geschrieben. Diese Kennwerte enthalten Informationen über die Anzahl der aufgetretenen Fehlerfälle, die maximale Periodendauer, die Fehlertiefe und über die maximale Anzahl gleichzeitig betroffener Phasen. Dies kann z.B. in Form von Vektoren oder Matrizen erfolgen.

In einem siebten Schritt 37 wird dann automatisiert eine Stromversorgung in Abhängigkeit von dem erkannten Betriebsverhalten, insbesondere den erkannten Fehlern, ausgewählt und/oder konfiguriert.

Hierbei kann auf eine Datenbank mit verschiedenen Typen und Konfigurationen von Stromversorgungen zurückgegriffen werden, denen ebenfalls Kennwerte zum Betriebsverhalten, insbesondere zu Fehlern, eines Versorgungsnetzes zugeordnet sind. Die Datenbank kann dann anhand der ermittelten Kennwerte auf geeignete Typen oder Konfiguration durchsucht werden. Erfüllt ein Typ oder eine Konfiguration einer Stromversorgung die Anforderungen, die sämtliche ermittelten Kennwerte stellen, so wird es als ein Vorschlag für eine geeignete Stromversorgung ausgewählt.

In dem Schritt 36 ermittelten Ausfallzeiten sowie die in dem Schritt 32 empfangenen Angaben zu Lastnennstrom und Umgebungstemperatur können beispielsweise dazu genutzt werden, eine benötigte Pufferzeit der Stromversorgung zu ermitteln und um daraus abzuleiten, ob eine normale Stromversorgung ausreichend ist oder ob eine unterbrechungsfreie Stromversorgung benötigt wird. In letzterem Fall kann die benötigte Pufferzeit dann genutzt werden, um eine geeignete unterbrechungsfreie Stromversorgung auszuwählen und/oder zu konfigurieren.

Beispielsweise kann die Datenbank dazu mehrere unterschiedliche Typen von Stromversorgungseinheiten, USV-Einheiten und Energiespeichereinheiten umfassen und im Rahmen des Schrittes 37 kann eine optimale Konfiguration der Stromversorgung aus jeweils einem Typ einer Stromversorgungseinheit, einer USV-Einheit und einer oder mehreren Energiespeichereinheiten ermittelt werden.

Anhand eines ermittelten Spannungsbereiches des analysierten Versorgungsnetzes können Produkte identifiziert werden, die für diesen Spannungsbereich geeignet sind. Anhand ermittelter Spannungsschwellungen können zudem Produkte mit geeigneter Überspannungsfestigkeit ausgewählt werden.

Eine ermittelte Phasenasymmetrie kann dazu genutzt werden, um eine Stromversorgung auszuwählen, die eine entsprechende Toleranz aufweist.

Eine ermittelte Anzahl von Fehlern betroffener Phasen stellt ein besonders wertvolles Auswahlkriterium dar. Hierbei steck die Überlegung zugrunde, dass im Fall, dass alle erkannten Fehlertypen maximal eine Phase gleichzeitig betreffen, dann immer mindestens zwei Phasen voll funktionsfähig bleiben. Wenn es nun Produkte gibt, die auch mit nur zwei Phasen den Normalbetrieb aufrechterhalten können, so können diese anhand dieses Kriteriums ausgewählt werden.

Vorzugsweise wird in dem siebten Schritt 37 eine Stromversorgung ausgewählt und/oder konfiguriert, die das ermittelte Betriebsverhalten, insbesondere die ermittelten Fehler, des Versorgungsnetzes derart kompensiert, dass die Energieversorgung der elektrischen Verbraucher störungsfrei erfolgt.

In einem achten Schritt 38 werden Informationen (z.B. eine Bestellnummer) zu der ausgewählten und/oder konfigurierten Stromversorgung an den Kunden oder Projekteur ausgegeben. Wenn mehrere unterschiedliche Typen oder Konfigurationen von Stromversorgungen die netz- und lastseitigen Anforderungen erfüllen, können auch Informationen (z.B. Bestellnummern) zu mehreren, unterschiedliche Typen oder Konfigurationen an den Kunden oder Projekteur ausgegeben werden.

Der Kunde oder Projekteur kann dann in einem neunten Schritt 39 die Stromversorgung bestellen und sie in einem zehnten Schritt 40 in seiner Automatisierungseinrichtung installieren, d.h. eingangsseitig an das Versorgungsnetz 1 und ausgangsseitig an die Verbraucher 2, 3, 4, 5, 6, 7 anschließen.

Die Schritte 31 bis 38 erfolgen dabei zumindest teilweise, vorzugsweise vollständig, automatisiert - zum Beispiel durch eine geeignete Führung des Kunden oder Projekteurs durch den Verfahrensablauf mit Hilfe eines Computerprogrammes, das auf einem Computer ausgeführt wird. Der Computer kann beispielsweise als Server ausgebildet sein, der von einem Anbieter von Stromversorgungen betrieben wird. Das Programm kann aber auch auf einer lokalen oder entfernten Rechnersystem (Cloud) laufen. Das Programm kann auch in eine Projektierungstool für Anlagen der industriellen Automatisierungstechnik oder Gebäudetechnik integriert sein. Es kann auch nur einfach von einem Anbieter von Stromversorgungen bereitgestellt werden und von einem Nutzer über das Internet auf seinen eigenen Computer herunterladbar sein.

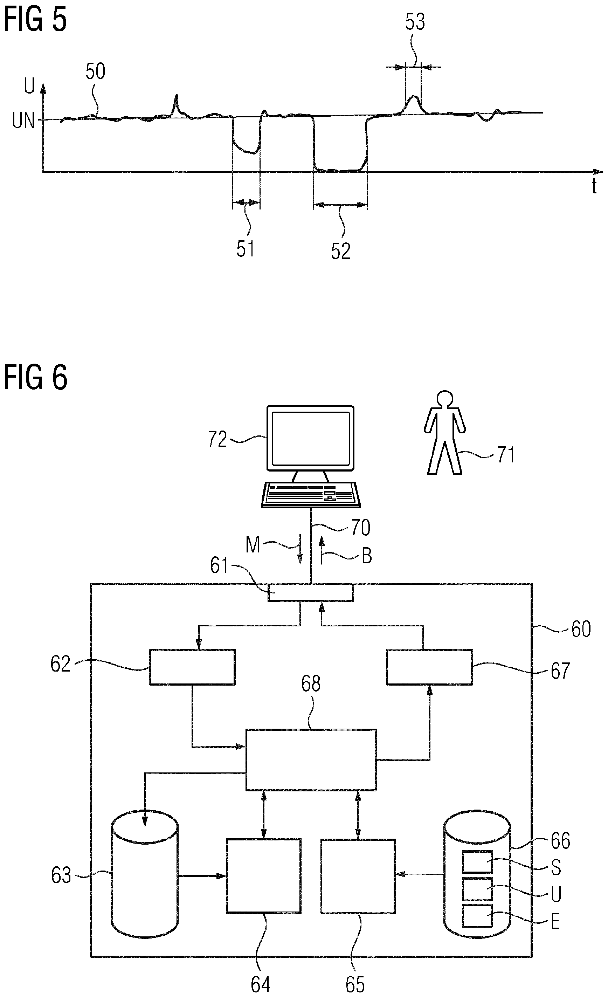

FIG 5 zeigt beispielhaft einen anhand von Messdaten ermittelten zeitlichen Verlauf 50 des Effektivwertes U der Spannung eines Versorgungsnetzes (d.h. der Eingangsspannung der Stromversorgung) in Abhängigkeit von der Zeit t, wobei mit U_{N} die Nennspannung des Versorgungsnetzes bezeichnet ist. Der ermittelte kurze Spannungseinbruch 51 kann dann beispielsweise automatisiert als Auswahlkriterium für eine hochwertige (highend) Stromversorgung genutzt werden. Aus dem ermittelten lange andauernden Spannungseinbruch 52 kann automatisiert geschlossen werden, dass eine unterbrechungsfreie Stromversorgung benötigt wird. Die Überspannung 53 dient als weiter verfeinertes Auswahlkriterium für eine geeignete Stromversorgung.

Ein in FIG 6 gezeigtes Ausführungsbeispiel eines erfindungsgemäßen Systems 60 dient zur computergestützten, automatisierten Auswahl und/oder Konfiguration einer elektronischen Stromversorgung zur Versorgung elektrischer Verbraucher mit Energie aus einem Versorgungsnetz (wie z.B. der Stromversorgung 10 im Fall der FIG 1 und 2). Insbesondere kann es zur Durchführung des im Zusammenhang mit FIG 4 erläuterten Verfahrens zur automatisierten Auswahl und/oder Konfiguration einer elektronischen Stromversorgung dienen.

Das System 60 umfasst eine Kommunikationsschnittstelle 61, eine Empfangseinheit 62, eine Datenbank 63 für Messdaten, eine Analyseeinheit 64, eine Auswahl- und/oder Konfigurationseinheit 65, eine Datenbank 66 mit Daten zu Stromversorgungs-Produkten, eine Ausgabeeinheit 67 und eine Steuerungseinheit 68.

Die Kommunikationsschnittstelle 61 dient zur bidirektionalen Anbindung des Systems 60 an ein Kommunikationsnetzwerk 70 (z.B. das Internet) und somit an einen Nutzer 71 (z.B. einen Kunden oder Projekteur einer Stromversorgung) des Systems 60, der beispielsweise mittels eines Computers 72 mit entsprechender Kommunikationsschnittstelle mit dem System 60 kommuniziert.

Die Steuerungseinheit 68 steuert mit Hilfe eines Computerprogrammes das Zusammenspiel der verschiedenen Komponenten 61 - 67, leitet Daten zwischen den verschiedenen Komponenten weiter und steuert die Interaktion mit dem Computer 72 bzw. dem Nutzer 71.

Die Empfangseinheit 62 ist ausgebildet, Messdaten M oder daraus abgeleitete Daten des Versorgungsnetzes von dem Computer 72 bzw. dem Nutzer 71 über die Kommunikationsschnittstelle 61 zu empfangen. Die empfangenen Daten werden von der Steuerungseinheit 68 in der Datenbank 63 für Messdaten abgespeichert.

Die Analyseeinheit 64 ist ausgebildet, die empfangenen und in der Datenbank 63 abgespeicherten Daten zu analysieren, um ein Betriebsverhalten, insbesondere Fehler, des Versorgungsnetzes zu ermitteln. Weiterhin ist sie ausgebildet einen Kennwert oder mehrere Kennwerte für das ermittelte Betriebsverhalten, insbesondere die ermittelten Fehler, des Versorgungsnetzes zu bilden. Dies kann z.B. in Form von Vektoren oder Matrizen erfolgen.

Die Auswahl- und/oder Konfigurationseinheit 65 ist ausgebildet, eine Stromversorgung in Abhängigkeit von dem ermittelten Betriebsverhalten bzw. dem ermittelten Kennwert/den ermittelten Kennwerten des Betriebsverhaltens auszuwählen und/oder zu konfigurieren und Informationen (z.B. eine Bestellnummer) B zu der ausgewählten und/oder konfigurierten Stromversorgung bereitzustellen. Die Auswahl- und/oder Konfigurationseinheit 65 greift auf die Datenbank 66 zu, in der verschiedene Typen und Konfigurationen von Stromversorgungen gespeichert sind, denen jeweils Kennwerte zum Betriebsverhalten, insbesondere zu Fehlern, eines Versorgungsnetzes zugeordnet sind. Die Datenbank 66 kann dann von der Einheit 65 anhand der durch die Analyseeinheit 64 ermittelten Kennwerte auf geeignete Typen oder Konfiguration durchsucht werden. Erfüllt ein Typ oder eine Konfiguration einer Stromversorgung die Anforderungen, die sämtliche ermittelten Kennwerte stellen, so wird es als ein Vorschlag für eine geeignete Stromversorgung ausgewählt.

Beispielsweise kann die Datenbank 66 mehrere unterschiedliche Typen von Stromversorgungseinheiten S, USV-Einheiten U und Energiespeichereinheiten E umfassen und durch die Auswahl- und/oder Konfigurationseinheit 66 wird eine optimale Konfiguration der Stromversorgung aus jeweils einem Typ einer Stromversorgungseinheit S, einer USV-Einheit U und einer oder mehreren Energiespeichereinheiten E ermittelt.

Die Ausgabeeinheit 67 dient zur Ausgabe der Informationen B zu der ausgewählten und/oder konfigurierten Stromversorgung über die Kommunikationsschnittstelle 61 an den Nutzer 71.

Das System 60 kann beispielsweise von einem Hersteller von Stromversorgungen auf einer lokalen oder einer entfernten Cloud installiert sein und die Messdaten M von dem Nutzer 71 über das Internet empfangen bzw. die Informationen B zu der Stromversorgung über das Internet an den Nutzer 71 übermitteln.

Die Erfindung basiert somit auf einer automatisierten Analyse der Primärseite der Stromversorgung. Durch eine automatisierte Analyse können selbst große Messreihen in kurzer Zeit verarbeitet und auf Fehlerfälle hin untersucht werden. Die schnelle und genaue Analyse der Primärseite erlaubt eine gezielte, automatische Auswahl einer Stromversorgung, die einen sicheren Betrieb einer technischen Einrichtung, wie z.B. einer Anlage, bedeutet. Durch die hohe Zielgenauigkeit bei der Auswahl wird die Leistung und Effizienz der jeweiligen Applikation gesteigert, denn mit der Erfindung wird das richtige Produkt für das analysierte Netz gefunden. Damit ist es vorteilhaft möglich, aus gemessenen Störungsparametern des Versorgungsnetzes über normierte Kennwerte eine gezielte, automatische Produktauswahl zu erreichen.

## Patentansprüche

1. Verfahren zur automatisierten Konfiguration einer elektronischen Stromversorgung (10) zur Versorgung von elektrischen Verbrauchern (2, 3, 4, 5, 6, 7) mit Energie aus einem Versorgungsnetz (1), wobei die Konfiguration der Stromversorgung (10) unter Nutzung von Messdaten (M) und/oder daraus abgeleiteter Daten des Versorgungsnetzes (1) erfolgt,
wobei zur Konfiguration der Stromversorgung (10) die Messdaten (M) und/oder die daraus abgeleiteten Daten des Versorgungsnetzes (1) analysiert und daraus Fehler des Versorgungsnetzes (1) ermittelt werden,
wobei die Daten auf Fehler in Form von Ereignissen analysiert werden, **dadurch gekennzeichnet, dass** die Ereignisse ein Netz- und/oder Phasenausfall sind,
wobei die Stromversorgung (10) als ein Schaltnetzteil ausgebildet ist, wobei das Schaltnetzteil eine elektronische Baugruppe ist, die eine unstabilisierte Eingangsspannung in eine konstante Ausgangsspannung umwandelt, und
wobei die Stromversorgung (10) konfiguriert wird, dass sie die ermittelten Fehler derart kompensiert, dass die Energieversorgung der elektrischen Verbraucher (2, 3, 4, 5, 6, 7) störungsfrei erfolgt, wobei das Verfahren die folgenden Schritte umfasst:
- Empfangen der Messdaten (M) und/oder daraus abgeleiteter Daten des Versorgungsnetzes (1),
- Analysieren der empfangenen Daten, um die Fehler des Versorgungsnetzes (1) zu ermitteln,
- Bilden mehrerer Kennwerte für die ermittelten Fehler des Versorgungsnetzes,
- Konfigurieren der Stromversorgung (1) in Abhängigkeit von den ermittelten Fehlern, wobei auf eine Datenbank (66) mit verschiedenen Typen und Konfigurationen von Stromversorgungen zurückgegriffen wird, denen jeweils Kennwerte zu Fehlern des Versorgungsnetzes (1) zugeordnet sind,
- Ausgeben von Informationen (B) zu der konfigurierten Stromversorgung (10).

2. Verfahren nach Anspruch 1, wobei die Messdaten (M) bzw. die daraus abgeleiteten Daten jeweils einen Wert und einen zugeordneten Zeitstempel umfassen, der eine Information über den Zeitpunkt der Erfassung des Wertes gibt.

3. Verfahren nach einem der vorhergehenden Ansprüche, wobei die Stromversorgung (10) ausgangsseitig eine Gleichspannung mit einer Nennspannung von 5 - 60 V dc, insbesondere von 24 V dc, bereitstellt.

4. Verfahren nach einem der vorhergehenden Ansprüche, wobei die Stromversorgung (10) als eine unterbrechungsfreie Stromversorgung ausgebildet ist bzw. zusätzlich eine unterbrechungsfreie Stromversorgung umfasst.

5. System (60) zur automatisierten Konfiguration einer elektronischen Stromversorgung (10) zur Versorgung von elektrischen Verbrauchern (2, 3, 4, 5, 6, 7) mit Energie aus einem Versorgungsnetz (1), wobei das System (60) derart ausgebildet ist, dass die Konfiguration der Stromversorgung (10) unter Nutzung von Messdaten (M) und/oder daraus abgeleiteter Daten des Versorgungsnetzes (1) erfolgt, **dadurch gekennzeichnet, dass** das System (60) umfasst:
- eine Empfangseinheit (62) zum Empfangen von Messdaten (M) und/oder daraus abgeleiteter Daten des Versorgungsnetzes (1),
- eine Analyseeinheit (64), die ausgebildet ist, die empfangenen Daten zu analysieren, um Fehler des Versorgungsnetzes (1) zu ermitteln, wobei die Fehler in Form von Ereignissen analysiert werden, wobei die Ereignisse ein Netz- und/oder Phasenausfall sind, wobei die Analyseeinheit (64) ausgebildet ist, mehrere Kennwerte für die ermittelten Fehler des Versorgungsnetzes (1) zu bilden,
- eine Konfigurationseinheit (65), die ausgebildet ist, eine Stromversorgung (10) in Abhängigkeit von den ermittelten Fehlern zu konfigurieren, wobei die Konfigurationseinheit (65) auf eine Datenbank (66) zugreift, in der verschiedene Typen und Konfigurationen von Stromversorgungen gespeichert sind, denen jeweils Kennwerte zu Fehlern des Versorgungsnetzes zugeordnet sind,
- eine Ausgabeeinheit (67) zur Ausgabe von Informationen (B) zu der konfigurierten Stromversorgung,
wobei die Stromversorgung (10) als ein Schaltnetzteil ausgebildet ist, wobei das Schaltnetzteil eine elektronische Baugruppe ist, die eine unstabilisierte Eingangsspannung in eine konstante Ausgangsspannung umwandelt, und
wobei das System ausgebildet ist, die Stromversorgung (10) zu konfigurieren, dass diese die ermittelten Fehler derart kompensiert, dass die Energieversorgung der elektrischen Verbraucher (2, 3, 4, 5, 6, 7) störungsfrei erfolgt.

6. System (60) nach Anspruch 5, wobei die Stromversorgung (10) als eine unterbrechungsfreie Stromversorgung ausgebildet ist bzw. zusätzlich eine unterbrechungsfreie Stromversorgung umfasst.

7. Computer-Programm umfassend Anweisungen die, wenn das Programm auf einem Computer ausgeführt wird, den Computer veranlassen, das Verfahren nach einem der Ansprüche 1 bis 4 auszuführen.

## Claims

1. Method for automated configuration of an electronic power supply (10) for supplying energy from a supply network (1) to electricity consumers (2, 3, 4, 5, 6, 7), wherein the power supply (10) is configured using measurement data (M) and/or data of the supply network (1) derived therefrom,
wherein in order to configure the power supply (10), the measurement data (M) and/or the data of the supply network (1) derived therefrom is analysed and errors in the supply network (1) are determined therefrom,
wherein the data is analysed for errors in the form of events, **characterised in that** the events are a mains and/or phase failure,
wherein the power supply (10) is embodied as a switching power supply, wherein the switching power supply is an electronic assembly which converts an unstabilised input voltage into a constant output voltage, and
wherein the power supply (10) is configured so that it compensates for the determined errors in such a way that the power supply to the electrical consumer (2, 3, 4, 5, 6, 7) is carried out in a failure-free manner, wherein the method comprises the following steps:
- Receiving the measurement data (M) and/or data of the supply network (1) derived therefrom,
- Analysing the received data in order to determine the errors in the supply network (1),
- Forming a number of characteristic values for the determined errors in the supply network,
- Configuring the power supply (1) as a function of the determined errors, wherein a database (66) with different types and configurations of power supplies is reverted to, to which in each case characteristic values relating to errors in the supply network (1) are assigned,
- Outputting information (B) relating to the configured power supply (10).

2. Method according to claim 1, wherein the measurement data (M) or the data derived therefrom each comprise a value and an assigned time stamp which provides information about the point in time at which the value is detected.

3. Method according to one of the preceding claims, wherein the power supply (10) provides a direct voltage with a nominal voltage of 5 - 60 V dc, in particular of 24V dc, on the output side.

4. Method according to one of the preceding claims, wherein the power supply (10) is embodied as an interruption-free power supply or additionally comprises an interruption-free power supply.

5. System (60) for automated configuration of an electronic power supply (10) for supplying energy from a supply network (1) to electrical consumers (2, 3, 4, 5, 6, 7), wherein the system (60) is embodied such that the power supply (10) is configured using measurement data (M) and/or data of the supply network (1) derived therefrom, **characterised in that** the system (60) comprises:
- a receiving unit (62) for receiving measurement data (M) and/or data of the supply network (1) derived therefrom,
- an analysis unit (64) which is embodied to analyse the received data in order to determine errors in the power supply (1), wherein the errors are analysed in the form of events, wherein the events are a mains and/or phase failure, wherein the analysis unit (64) is embodied to form a number of characteristic values for the determined errors in the supply network (1),
- a configuration unit (65) which is embodied to configure a power supply (10) as a function of the determined errors, wherein the configuration unit (65) reverts back to a database (66), in which different types and configurations of power supplies are stored, to which in each case characteristic values relating to errors in the supply network are assigned,
- an output unit (67) for outputting information (B) relating to the configured power supply,
wherein the power supply (10) is embodied as a switching power supply, wherein the switching power supply is an electronic assembly, which converts unstabilised input voltage into a constant output voltage, and
wherein the system is embodied to configure the power supply (10) so that this compensates for the determined errors in such a way that the power supply to the electrical consumers (2, 3, 4, 5, 6, 7) is carried out in a failure-free manner.

6. System (60) according to claim 5, wherein the power supply (10) is embodied as an interruption-free power supply or additionally comprises an interruption-free power supply.

7. Computer program comprising instructions, which, when the program is executed on a computer, trigger the computer to execute the method according to one of claims 1 to 4.

## Revendications

1. Procédé de configuration automatisée d'une alimentation (10) électronique en courant, pour l'alimentation de consommateurs (2, 3, 4, 5, 6, 7) électriques en énergie à partir d'un réseau (1) d'alimentation, dans lequel la configuration de l'alimentation (10) en courant s'effectue en utilisant des données (M) de mesure et/ou des données qui s'en déduisent du réseau (1) d'alimentation, dans lequel, pour la configuration de l'alimentation (10) en courant, on analyse les données (M) de mesure et/ou les données qui s'en déduisent du réseau (1) d'alimentation et on en détermine des défauts du réseau (1) d'alimentation,
dans lequel on analyse les données en ce qui concerne les défauts sous la forme d'évènements, **caractérisé en ce que** les évènements sont une défaillance de réseau et/ou de phase,
dans lequel l'alimentation (10) en courant est constituée en alimentation à découpage, dans lequel l'alimentation à découpage est un module électronique, qui transforme une tension d'entrée non stabilisée en une tension de sortie constante, et
dans lequel on configure l'alimentation (10) en courant **en ce qu'**elle compense les défauts déterminés, de manière à ce que l'alimentation en énergie des consommateurs (2, 3, 4, 5, 6, 7) électriques s'effectue sans perturbation, dans lequel le procédé comprend les stades suivants :
- réception des données (M) de mesure et/ou des données qui s'en déduisent du réseau (1) d'alimentation,
- analyse des données reçues afin de déterminer les défauts du réseau (1) d'alimentation,
- formation de plusieurs valeurs caractéristiques des défauts déterminés du réseau d'alimentation,
- configuration de l'alimentation (1) en courant en fonction des défauts déterminés, dans lequel on accède à une base (66) de données ayant des types et des configurations différents d'alimentations en courant, auxquels respectivement des valeurs caractéristiques sont affectées à des défauts du réseau (1) d'alimentation,
- sortie d'informations (B) sur l'alimentation (10) en courant configurée.

2. Procédé suivant la revendication 1, dans lequel les données (M) de mesure et respectivement les données qui s'en déduisent comprennent respectivement une valeur et une estampille temporelle associée, qui donne une information sur l'instant de la détection de la valeur.

3. Procédé suivant l'une des revendications précédentes, dans lequel l'alimentation (10) en courant donne du côté de la sortie une tension continue ayant une tension nominale de 5 - 60 V en courant continu, en particulier de 24 V en courant continu.

4. Procédé suivant l'une des revendications précédentes, dans lequel l'alimentation (10) en courant est constituée sous la forme d'une alimentation en courant sans interruption ou comprend supplémentairement une alimentation en courant sans interruption.

5. Système (60) de configuration automatisée d'une alimentation (10) électronique en courant pour l'alimentation de consommateurs (2, 3, 4, 5, 6, 7) électriques en énergie à partir d'un réseau (1) d'alimentation, dans lequel le système (60) est constitué de manière à ce que la configuration de l'alimentation (10) en courant s'effectue en utilisant des données (M) de mesure et/ou des données qui s'en déduisent du réseau (1) d'alimentation, **caractérisé en ce que** le système (60) comprend :
- une unité (62) de réception pour la réception de données (M) de mesure et/ou de données qui s'en déduisent du réseau (1) d'alimentation,
- une unité (64) d'analyse, qui est constituée pour analyser les données reçues, afin de déterminer des défauts du réseau (1) d'alimentation, dans lequel on analyse les défauts sous la forme d'évènements, dans lequel les évènements sont une défaillance de réseau et/ou de phase, dans lequel l'unité (64) d'analyse est constituée pour former plusieurs valeurs caractéristiques des défauts déterminés du réseau (1) d'alimentation,
- une unité (65) de configuration, qui est constituée pour configurer une alimentation (10) en courant en fonction des défauts déterminés, dans lequel l'unité (65) de configuration accède à une base (66) de données, dans laquelle divers types et configurations d'alimentation en courant sont en mémoire, auxquels des valeurs caractéristiques respectives sont associées à des défauts du réseau d'alimentation,
- une unité (67) de sortie pour donner des informations (B) sur l'alimentation en courant configurée,
dans lequel l'alimentation (10) en courant est constituée sous la forme d'une alimentation à découpage, dans lequel l'alimentation à découpage est un module électronique, qui transforme une tension d'entrée non stabilisée en une tension de sortie constante, et
dans lequel le système est constitué pour configurer l'alimentation (10) en courant, **en ce que** celle-ci compense les défauts déterminés, de manière à ce que l'alimentation en énergie des consommateurs (2, 3, 4, 5, 6, 7) électriques s'effectue sans perturbation.

6. Système (60) suivant la revendication 5, dans lequel l'alimentation (10) en courant est constituée sous la forme d'une alimentation en courant sans interruption ou comprend supplémentairement une alimentation en courant sans interruption.

7. Programme d'ordinateur comprenant des instructions qui, lorsque le programme est exécuté sur un ordinateur, font que l'ordinateur exécute le procédé suivant l'une des revendications 1 à 4.
